(19) Europäisches Patentamt
European Patent Office
Office européen des brevets

(11) **EP 3 120 171 B1**

(12) **FASCICULE DE BREVET EUROPEEN**

(45) Date de publication et mention
de la délivrance du brevet:
**11.09.2019 Bulletin 2019/37**

(21) Numéro de dépôt: **15712848.9**

(22) Date de dépôt: **20.03.2015**

(51) Int Cl.:
*G02B 3/12* *(2006.01)*         *G02B 3/14* *(2006.01)*
*G02B 7/02* *(2006.01)*

(86) Numéro de dépôt international:
**PCT/EP2015/055920**

(87) Numéro de publication internationale:
**WO 2015/140294 (24.09.2015 Gazette 2015/38)**

(54) **DISPOSITIF OPTIQUE A MEMBRANE DEFORMABLE A TEMPS DE REPONSE REDUIT**

OPTISCHE VORRICHTUNG MIT VERFORMBARER MEMBRAN MIT VERMINDERTEM ZEITVERHALTEN

OPTICAL DEVICE WITH DEFORMABLE MEMBRANE HAVING REDUCED RESPONSE TIME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2014 FR 1452342**

(43) Date de publication de la demande:
**25.01.2017 Bulletin 2017/04**

(73) Titulaire: **Webster Capital LLC**
**Wilmington, Delaware 19801 (US)**

(72) Inventeur: **BOLIS, Sébastien**
**F-38920 Crolles (FR)**

(74) Mandataire: **Lang, Johannes**
**Bardehle Pagenberg Partnerschaft mbB**
**Patentanwälte, Rechtsanwälte**
**Prinzregentenplatz 7**
**81675 München (DE)**

(56) Documents cités:
**US-A1- 2008 144 186     US-A1- 2009 086 331**

**Description**

**DOMAINE DE L'INVENTION**

La présente invention concerne un dispositif optique à membrane déformable ainsi qu'un procédé pour réduire le temps de réponse d'un tel dispositif.

**ARRIERE PLAN DE L'INVENTION**

Il est connu de former un dispositif optique en enfermant un volume constant d'un fluide entre une membrane déformable et un support présentant une face s'étendant sensiblement parallèlement à la membrane.

Une zone d'ancrage périphérique de la membrane est liée au support.

La partie centrale constitue le champ optique du dispositif.

Un dispositif d'actionnement de la membrane est agencé dans une zone de la membrane, dite zone d'actionnement, située entre la zone d'ancrage périphérique et la partie centrale.

Ledit dispositif d'actionnement comprend un ou plusieurs actionneurs aptes à fléchir vers le fluide et/ou dans le sens opposé au fluide sous l'application d'une tension électrique d'actionnement.

Le fléchissement du dispositif d'actionnement provoque une variation de l'épaisseur de fluide entre la membrane et la face du support opposée à la membrane, ce qui entraîne l'écoulement du volume de fluide situé dans cette région soit vers le centre du dispositif soit vers la périphérie du dispositif. On appelle « région d'écoulement » la partie du volume de fluide située entre la zone d'actionnement de la membrane et la face du support opposée à la membrane.

L'écoulement du volume de fluide a pour effet de modifier la pression de fluide à laquelle est soumise la partie centrale de la membrane, ce qui se traduit par une déformation de ladite partie centrale, modifiant ainsi la focale du dispositif.

Le temps de réponse d'un tel dispositif optique est défini comme étant l'intervalle entre l'instant auquel on applique une tension électrique d'actionnement au dispositif d'actionnement en vue d'obtenir une focale déterminée et l'instant auquel on obtient effectivement la focale souhaitée.

Ce temps de réponse est lié à la capacité du fluide à s'écouler de la région d'écoulement vers la partie centrale du dispositif ou inversement.

Pour augmenter les performances du dispositif, on cherche généralement à réduire ce temps de réponse.

Le document FR 2 965 068 décrit un agencement particulier du dispositif optique permettant de réduire le temps de réponse. Cet agencement comprend une structure délimitant, dans la cavité définie par la membrane et le support, une chambre principale au niveau de la partie centrale de la membrane et une chambre périphérique au niveau de la région d'écoulement. Lesdites chambres sont en communication fluidique au niveau de ladite structure. La géométrie du dispositif est adaptée pour forcer l'écoulement du fluide au travers de ladite structure de la chambre principale vers la chambre périphérique ou inversement tout en limitant la quantité de fluide dans le dispositif.

Il subsiste cependant un besoin d'améliorer encore le temps de réponse de ce type de dispositif optique.

**BREVE DESCRIPTION DE L'INVENTION**

Un but de l'invention est donc de concevoir un dispositif optique présentant un temps de réponse réduit.

Conformément à l'invention, il est proposé un dispositif optique comprenant :

- une membrane déformable,
- un support auquel une zone d'ancrage périphérique de ladite membrane est liée,
- une cavité remplie d'un volume constant d'un fluide, ladite cavité étant délimitée par la membrane, un fond s'étendant sensiblement parallèlement à la membrane et une paroi du support s'étendant entre le fond et la membrane,
- un dispositif d'actionnement d'une zone de la membrane située entre la zone d'ancrage périphérique et une partie centrale de la membrane, configuré pour fléchir par application d'une tension électrique d'actionnement de sorte à déplacer une partie du volume de fluide située dans une région, dite région d'écoulement, située entre la zone d'actionnement de la membrane et le fond de la cavité,

ledit dispositif optique étant caractérisé en ce qu'il comprend un élément chauffant adapté pour chauffer localement le fluide situé dans la région d'écoulement

Selon une forme d'exécution, le fond de la cavité est une paroi du support.

Selon un mode de réalisation, l'élément chauffant est agencé sur le fond de la cavité.

Un élément d'isolation thermique peut être intercalé entre l'élément chauffant et le fond de la cavité.

De manière avantageuse, l'élément chauffant est agencé sur une région du fond en vis-à-vis de la région d'écoulement.

Selon un mode de réalisation, le dispositif comprend un élément d'isolation thermique entre l'élément chauffant et le support.

Selon une forme d'exécution de l'invention, le fond de la cavité comprend une membrane déformable additionnelle.

Selon un mode de réalisation, l'élément chauffant est agencé dans la cavité, en contact avec le fluide.

Selon un mode de réalisation, l'élément chauffant est agencé sur ou sous la zone d'actionnement de la membrane.

Selon un mode de réalisation, l'élément chauffant fait partie du dispositif d'actionnement de la membrane.

Ainsi, si le dispositif d'actionnement de la membrane est un dispositif piézoélectrique comprenant un empilement d'une couche piézoélectrique et d'au moins deux électrodes agencées de part et d'autre de la couche piézoélectrique et au moins une desdites électrodes constitue l'élément chauffant.

Selon un mode de réalisation, l'élément chauffant présente une forme annulaire en regard de la zone d'actionnement de la membrane.

Selon un mode de réalisation, l'élément chauffant est agencé sur la paroi de la cavité s'étendant entre le fond et la membrane.

Selon un mode de réalisation, l'élément chauffant est transparent à au moins une longueur d'onde du domaine visible.

Selon un mode de réalisation, l'élément chauffant comprend en outre un élément de diffusion de chaleur s'étendant entre le fluide et l'élément chauffant, ledit élément de diffusion de chaleur présentant une surface plus grande que celle de l'élément chauffant.

Selon un mode de réalisation, le dispositif comprend un élément d'isolation thermique entre l'élément chauffant et la membrane.

Selon un mode de réalisation, l'élément chauffant comprend une résistance chauffante comprenant deux bornes de connexion, le dispositif optique comprenant en outre un système de pilotage connecté entre les bornes de ladite résistance pour faire passer un courant électrique au travers de la résistance.

De manière avantageuse, le dispositif comprend un capteur de température et le système de pilotage est configuré pour faire passer un courant électrique au travers de la résistance chauffante lorsque la température mesurée par ledit capteur est inférieure à un seuil.

Selon un mode de réalisation, le système de pilotage est configuré pour faire passer un courant électrique au travers de la résistance chauffante dès que l'une des conditions suivantes est remplie : le dispositif d'actionnement de la membrane est activé, le système de pilotage reçoit un signal de mise en marche du dispositif ou la réponse du dispositif optique n'est pas conforme à la réponse attendue.

De manière optionnelle, le système de pilotage est configuré pour cesser de faire circuler un courant électrique au travers de la résistance chauffante au bout d'une durée déterminée.

Un autre objet de l'invention concerne un dispositif de prise de vue comprenant au moins un dispositif optique tel que décrit ci-dessus.

Un autre objet de l'invention concerne un procédé pour réduire le temps de réponse d'un dispositif optique comprenant :

- une membrane déformable,
- un support auquel une zone d'ancrage périphérique de ladite membrane est liée,
- une cavité remplie d'un volume constant d'un fluide, ladite cavité étant délimitée par la membrane, un fond s'étendant sensiblement parallèlement à la membrane et une paroi du support s'étendant entre le fond et la membrane,
- un dispositif d'actionnement d'une zone de la membrane située entre la zone d'ancrage périphérique et une partie centrale de la membrane, configuré pour fléchir par application d'une tension électrique d'actionnement de sorte à déplacer une partie du volume de fluide située dans une région, dite région d'écoulement, située entre la zone d'actionnement de la membrane et une face du support opposée à ladite membrane,

ledit procédé étant caractérisé en ce qu'il comprend un chauffage localisé du fluide dans la région d'écoulement de sorte à diminuer la viscosité du fluide dans la dite région.

Selon un mode de réalisation, le chauffage est limité à la région d'écoulement.

Selon un mode de réalisation, ledit procédé comprend la mesure d'une température dans l'environnement dudit dispositif optique et le chauffage est mis en oeuvre lorsque ladite température est inférieure à un seuil.

Selon un mode de réalisation, le chauffage est mis en oeuvre dès que le dispositif d'actionnement est activé.

Eventuellement, le chauffage cesse au bout d'une durée déterminée.

Selon un mode de réalisation, le chauffage est réalisé de manière impulsionnelle.

Selon un mode de réalisation, le dispositif d'actionnement de la membrane est un dispositif piézoélectrique comprenant un empilement d'une couche piézoélectrique et d'au moins deux électrodes agencées de part et d'autre de la couche piézoélectrique et le chauffage est réalisé en faisant passer un courant électrique dans lesdites électrodes.

De manière avantageuse, on applique aux bornes de chaque électrode une différence de potentiel de telle sorte que la différence entre le potentiel des deux électrodes soit constante sur la surface de la couche piézoélectrique.

**BREVE DESCRIPTION DES DESSINS**

D'autres caractéristiques et avantages de l'invention ressortiront de la description détaillée qui va suivre, en référence aux dessins annexés sur lesquels :

- la figure 1 est une vue en coupe d'un dispositif optique dans lequel l'élément chauffant est agencé sur sensiblement toute la surface du fond de la cavité contenant le fluide,
- la figure 2 est une vue en coupe d'un dispositif optique selon un mode de réalisation dans lequel l'élément chauffant présente une forme annulaire et est agencé sur une région du fond de la cavité en vis-à-vis de la région d'écoulement,
- la figure 3 est une vue en coupe d'un dispositif optique selon une variante de la figure 2,
- la figure 4 est une vue en coupe d'un dispositif optique selon un mode de réalisation dans lequel l'élément chauffant est agencé dans la zone d'actionnement de la membrane, sur la face en contact avec le fluide dans la région d'écoulement,
- la figure 5 est une vue en coupe d'un dispositif optique selon une variante de la figure 4 dans laquelle l'élément chauffant est agencé dans la zone d'actionnement de la membrane, sur la face opposée au fluide,
- la figure 6 est une vue en coupe d'un dispositif optique dans lequel l'élément chauffant est agencé sur une paroi de la cavité s'étendant entre le fond et la membrane,
- la figure 7 est une vue en coupe d'un dispositif optique selon un mode de réalisation dans lequel l'élément chauffant fait partie du dispositif d'actionnement de la membrane,
- la figure 8 est une vue en coupe d'un dispositif optique selon un mode de réalisation dans lequel un élément de diffusion de chaleur s'étend entre le fluide et l'élément chauffant,
- la figure 9 est une vue en coupe d'un dispositif optique selon un mode de réalisation dans lequel l'élément chauffant est agencé sur une face du support opposée au fond de la cavité,
- la figure 10 est une vue en coupe d'un dispositif optique selon un mode de réalisation dans lequel l'élément chauffant est agencé sur une partie du support s'étendant au-delà de la zone d'ancrage de la membrane,
- la figure 11 est une vue en coupe d'un dispositif optique selon un mode de réalisation dans lequel un élément d'isolation thermique est agencé entre l'élément chauffant et le support,
- la figure 12 est une courbe illustrant la puissance P (en mW) en fonction de la profondeur p (en mm) de la cavité contenant le fluide,
- la figure 13A est un schéma de l'élément chauffant constitué d'une résistance chauffante s'étendant sur une surface pleine,
- la figure 13B est un schéma de l'élément chauffant constitué d'une résistance chauffante en forme de serpentin,
- les figures 14A et 14B illustrent deux exemples d'agencement d'une résistance chauffante en forme de serpentin sur une surface rectangulaire,
- les figures 15A et 15B illustrent deux exemples d'agencement d'une résistance chauffante en forme de serpentin sur une surface circulaire,
- les figures 16A et 16B illustrent deux exemples d'agencement d'une résistance chauffante en forme de serpentin sur une surface annulaire,
- la figure 17 illustre un exemple d'agencement d'une résistance chauffante en forme de serpentin sur une surface rectangulaire évidée en son centre,
- la figure 18 illustre un exemple de résistance chauffante s'étendant de manière continue sur une surface annulaire,
- la figure 19 est une vue en coupe d'un dispositif optique selon un mode de réalisation dans lequel l'élément chauffant est intégré au dispositif d'actionnement de la membrane,
- la figure 20 est une vue schématique éclatée d'un dispositif d'actionnement piézoélectrique conventionnel,
- la figure 21 est une vue schématique éclatée d'un dispositif d'actionnement piézoélectrique dont les électrodes sont des résistances chauffantes,
- la figure 22 présente la répartition de la différence de potentiel appliquée entre les électrodes d'un dispositif d'actionnement piézoélectrique conventionnel sur la longueur de la zone d'actionnement,
- la figure 23 représente la répartition de la différence de potentiel appliquée entre les électrodes d'un dispositif d'actionnement piézoélectrique du type de celui de la figure 21 lorsque l'élément chauffant n'est pas activé,
- la figure 24 représente la répartition de la différence de potentiel appliquée entre les électrodes d'un dispositif d'actionnement piézoélectrique du type de celui de la figure 21 lorsque l'élément chauffant est activé,
- la figure 25 illustre un mode de réalisation du dispositif optique comprenant deux membranes déformables couplées par le volume de fluide,
- la figure 26 illustre une variante du mode de réalisation de la figure 25 dans lequel un support intermédiaire est interposé en partie entre les deux membranes,
- la figure 27 illustre un mode de réalisation du dispositif optique comprenant deux membranes déformables associées chacune à un volume de fluide distinct.

Pour des raisons de lisibilité des figures, les différents éléments illustrés ne sont pas nécessairement représentés à la même échelle.

Les signes de référence sont utilisés d'une figure à l'autre pour désigner les mêmes éléments.

## DESCRIPTION DETAILLEE DE MODES DE REALISATION DE L'INVENTION

Le dispositif optique comprend d'une manière générale une cavité remplie d'un volume constant d'un fluide, ladite cavité étant délimitée :

- d'une part, par une membrane déformable,
- d'autre part, par un fond s'étendant sensiblement parallèlement à la membrane,
- enfin, par une paroi du support auquel une zone d'ancrage périphérique de la membrane est liée, ladite paroi s'étendant entre le fond et ladite membrane déformable.

La membrane comprend une partie centrale qui correspond à un champ optique du dispositif optique.

La membrane comprend donc une face, dite face intérieure, qui est en contact avec le fluide, et une face opposée, dite face extérieure, qui est en contact avec un second fluide, qui peut être l'air ambiant.

Par membrane, on entend tout film souple et étanche, de sorte que la membrane forme une barrière entre le fluide contenu dans la cavité et le fluide se situant sur la face opposée de la membrane.

Dans le cas où le dispositif optique est une lentille, qui fonctionne donc en transmission, la membrane et le fond de la cavité sont transparents, au moins dans leur partie centrale, à un faisceau optique destiné à se propager à travers la lentille, en traversant successivement la partie centrale de la membrane, le fluide et le fond de la cavité.

Dans le cas où le dispositif optique est un miroir, la partie centrale de la membrane et/ou du fond est réfléchissante.

Le fluide est suffisamment incompressible pour se déplacer vers la partie centrale du dispositif lorsque l'on applique un effort sur une membrane dans la direction du fluide, cet effort étant appliqué dans une partie intermédiaire entre la zone d'ancrage et la partie centrale de la membrane.

La membrane est apte à se déformer de manière réversible, depuis une position de repos (qui peut être plane ou non), sous l'action d'un tel déplacement du fluide, qui fait varier l'épaisseur de fluide se trouvant au niveau de la partie centrale de chaque membrane.

La forme du support et de la membrane peut présenter avantageusement une forme de révolution autour de l'axe optique du dispositif optique, mais l'homme du métier pourra choisir toute autre forme sans pour autant sortir de la portée de la présente invention.

La membrane est munie d'un dispositif d'actionnement d'une zone située entre la zone d'ancrage périphérique et la partie centrale.

Ledit dispositif d'actionnement est configuré pour fléchir par application d'une tension électrique d'actionnement de sorte à déplacer une partie du volume de fluide située dans une région, dite région d'écoulement, située entre la zone d'actionnement de la membrane et le fond de la cavité.

L'homme du métier connaît différents dispositifs d'actionnement utilisables pour actionner des membranes.

Ces dispositifs reposent sur différentes technologies, parmi lesquelles on peut citer l'actionnement piézoélectrique, l'actionnement électrostatique, électromagnétique, thermique ou encore à base de polymères électro-actifs.

On pourra à cet égard se référer à une description détaillée de tels dispositifs d'actionnement dans les documents FR2919073, FR2950154 et FR2950153.

Le choix de la technologie d'actionnement et le dimensionnement du dispositif d'actionnement dépend des performances attendues (par exemple la consommation électrique), des contraintes auxquelles il sera soumis pendant le fonctionnement du dispositif, ainsi que des considérations relatives à la tension électrique d'actionnement à appliquer.

Par exemple, un dispositif d'actionnement particulièrement adapté à l'obtention d'un unique sens d'actionnement repose sur la technologie piézoélectrique.

On rappelle qu'un actionneur piézoélectrique comporte un bloc de matériau piézoélectrique pris en sandwich totalement ou partiellement entre deux électrodes destinées, lorsqu'elles sont alimentées, à appliquer un champ électrique au matériau piézoélectrique. Ce champ électrique est utilisé pour commander une déformation mécanique du bloc de matériau piézoélectrique. Le bloc de matériau piézoélectrique peut être monocouche ou multicouche et s'étendre au-delà d'une électrode.

Le dispositif d'actionnement peut comprendre un unique actionneur sous la forme d'une couronne ou bien de plusieurs actionneurs distincts (par exemple sous forme de poutres) régulièrement répartis sur la circonférence de la membrane.

Eventuellement, les actionneurs peuvent être capables de fléchir dans deux sens opposés.

Le dispositif d'actionnement peut être agencé sur la face intérieure de la membrane, sur la face extérieure ou encore à l'intérieur de la membrane.

Eventuellement, le dispositif d'actionnement peut s'étendre en partie sur la zone d'ancrage périphérique.

Dans certains modes de réalisation, le fond est une paroi du support et est donc, contrairement à la membrane, sensiblement indéformable sous l'action d'un déplacement de fluide dans la cavité et de la variation de pression de fluide qui en résulte.

Dans d'autres modes de réalisation, le fond de la cavité comprend une deuxième membrane déformable, qui peut présenter des propriétés physiques, mécaniques et dimensionnelles identiques ou différentes de celle de la membrane évoquée plus haut. Dans ce cas, le fluide procure un couplage mécanique des deux membranes.

Par ailleurs, ledit dispositif optique comprend un élément chauffant adapté pour chauffer localement le fluide, ledit chauffage étant localisé dans la région d'écoulement et/ou dans la partie centrale de la cavité, c'est-à-dire la partie de la cavité située en regard de la partie centrale de la membrane.

Le chauffage localisé du fluide permet en effet de diminuer sa viscosité dans ladite région d'écoulement et ainsi favoriser l'écoulement du fluide vers la partie centrale ou vers la périphérie de la cavité, selon le sens de fléchissement du dispositif d'actionnement. Le temps de réponse du dispositif optique est alors réduit. De même, un chauffage localisé du fluide dans la partie centrale de la cavité favorise l'écoulement du fluide dans cette région et diminue par conséquent le temps de réponse du dispositif optique.

L'élément chauffant comprend avantageusement un conducteur ohmique (communément appelé « résistance ») dans lequel on fait passer un courant électrique.

Le conducteur ohmique est couplé à un système de pilotage qui commande l'intensité du courant électrique qui circule dans le conducteur ohmique ou la tension électrique à ses bornes.

Par effet Joule, on obtient une élévation de la température dudit conducteur et une puissance P dissipée sous forme de chaleur répondant à la formule :

$$P = \frac{U^2}{R}$$

où U est la tension électrique (en volts) appliquée aux bornes du conducteur et R est la valeur de la résistance (en ohms) dudit conducteur.

L'énergie thermique apportée par effet Joule pendant un temps $\Delta t$ est :

$$E_J = \frac{U^2}{R} \times \Delta t$$

Les équations ci-dessus correspondent à un contrôle de la tension électrique U appliquée aux bornes du conducteur.

Dans le cas où c'est le courant électrique I qui est contrôlé par le système de pilotage, la puissance P s'exprime :

$$P = R \times I^2$$

où I est le courant électrique (en ampères) circulant dans le conducteur. L'énergie thermique apportée par effet Joule pendant un temps $\Delta t$ est :

$$E_J = R \times I^2 \times \Delta t$$

Le conducteur ohmique peut être intégré dans le dispositif optique selon différents modes de réalisation qui sont décrits en détail plus bas.

Les performances du conducteur ohmique dépendent du ou des matériaux qui le constituent et de sa géométrie.

D'une manière générale, on cherchera à optimiser les matériaux et la géométrie du conducteur ohmique pour procurer un chauffage rapide du fluide tout en minimisant la consommation électrique du dispositif optique.

De manière alternative, un module Peltier peut être utilisé à la place du conducteur ohmique mentionné ci-dessus pour former l'élément chauffant.

De manière préférée, l'élément chauffant est positionné le plus près possible du fluide dans la région d'écoulement et/ou dans la partie centrale de la cavité - par exemple en contact direct avec le fluide, et présente une surface suffisamment grande pour procurer une surface d'échange thermique avec le fluide la plus grande possible.

Dans le cas où le temps de réponse du dispositif optique est satisfaisant à température ambiante, l'activation de l'élément chauffant peut n'avoir lieu qu'à basse température, lorsque cette température occasionne une diminution significative de la viscosité du fluide et par conséquent une baisse du temps de réponse du dispositif. Ainsi, en-dessous d'un seuil de température déterminé à partir duquel le temps de réponse du dispositif n'est plus acceptable, le système de pilotage est enclenché pour chauffer le fluide et ramener le temps de réponse à un niveau acceptable. Ce mode de pilotage est avantageux en ce qu'il minimise la puissance consommée par le dispositif optique. C'est en effet uniquement à basse température que l'élément chauffant contribue à la consommation électrique du dispositif optique.

De manière alternative, notamment lorsque le temps de réponse du dispositif optique est jugé insuffisant à température ambiante, l'activation de l'élément chauffant peut être systématique. Dans ce cas, le fluide est chauffé quelle que soit la température à laquelle est soumis le dispositif optique, ce qui permet de diminuer la viscosité du fluide et d'améliorer le temps de réponse. La durée de la chauffe peut dépendre de l'utilisation du dispositif.

L'activation de l'élément chauffant peut être réalisée de manière impulsionnelle, à chaque actionnement de la membrane. Pendant le temps de réponse visé (typiquement de l'ordre de 10 ms voire quelques ms), le fluide est chauffé pour faciliter son écoulement, puis le chauffage s'arrête tant que le dispositif est inactif, jusqu'à l'actionnement suivant.

Dans le cas où l'élément chauffant doit être activé en-dessous d'un certain seuil de température, il existe plusieurs solutions pour détecter la nécessiter de l'activer :

- la température peut être mesurée par un capteur qui peut être un conducteur ohmique dédiée à cette mesure dans le dispositif optique ou bien un capteur de température situé à l'extérieur du dispositif optique ;
- la température peut être mesurée par l'élément chauffant lui-même par une technique connue de l'homme du métier (méthode dite des quatre pointes) ;
- une caractéristique du dispositif optique peut être mesurée au repos (sans actionnement), si ladite caractéristique (par exemple la focale, le courant électrique aux bornes du dispositif d'actionnement) est influencée par la température,
- une caractéristique (par exemple la focale) du dispositif optique peut être mesurée après un certain temps d'actionnement et comparée à une valeur attendue : si la focale mesurée est de l'ordre de la focale attendue, le dispositif présente un temps de réponse suffisamment rapide et il n'est pas nécessaire de chauffer le fluide. Si la focale est inférieure à un seuil déterminé, cela signifie qu'il faut activer l'élément chauffant (l'intensité du courant devant passer au travers du conducteur ohmique pouvant être relié à la valeur de focale à atteindre). Comme évoqué à l'alinéa précédent on peut appliquer ce principe à une autre caractéristique du dispositif optique, tel que le courant aux bornes du dispositif d'actionnement ;
- une autre méthode consiste à utiliser le dispositif optique une première fois sans chauffage (par exemple, en laissant la séquence de mise au point se réaliser) et, si le résultat n'est pas au niveau escompté, activer l'élément chauffant.

Quel que soit le mode de détection retenu, si le chauffage n'est pas continu, le système de pilotage de l'élément chauffant fonctionne selon un algorithme adapté. La mise au point de cet algorithme est à la portée de l'homme du métier.

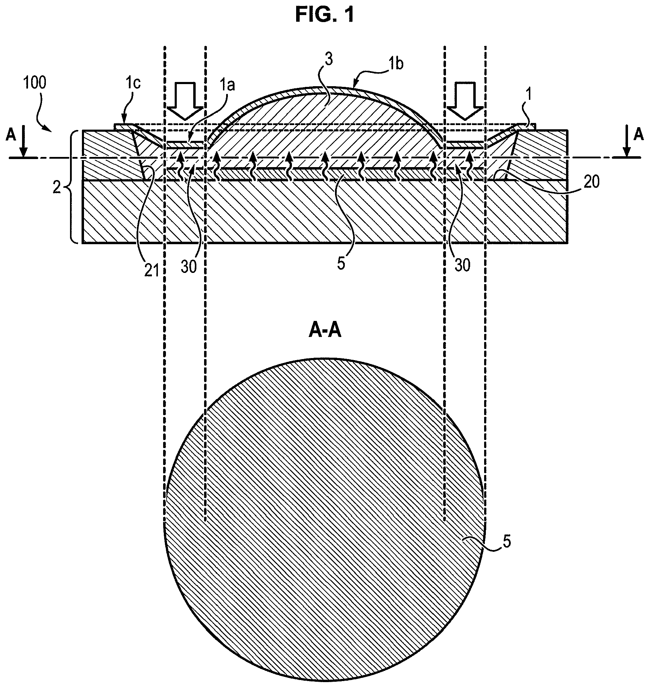

La figure 1 illustre un exemple d'un dispositif optique.

Le dispositif optique 100 comprend un support 2 présentant une forme évidée définissant une cavité comprenant un fond 20 et une paroi latérale 21 s'étendant à partir du fond.

Le support peut éventuellement être constitué d'un empilement de couches, de sorte que le matériau de la paroi 21 n'est pas nécessairement le même que celui du fond 20.

Par exemple, le substrat 2 peut être en verre.

La membrane déformable 100 présente une zone périphérique 1c par laquelle elle est ancrée de manière étanche sur le support 2.

La membrane définit ainsi, avec le fond 20 et la paroi 21, une cavité étanche remplie d'un volume constant d'un fluide 3.

Le dispositif 100 comprend en outre un dispositif d'actionnement (non illustré) agencé dans la zone d'actionnement 1a de la membrane qui est située entre la zone d'ancrage 1c et la partie centrale 1b de la membrane.

Au repos, c'est-à-dire lorsqu'aucune tension électrique n'est appliquée au dispositif d'actionnement, la membrane 1 est supposée plane (configuration représentée en pointillés). Néanmoins, cette illustration n'est pas limitative et la membrane peut présenter une configuration non plane au repos (par exemple pour former un dioptre convergent ou divergent) sans pour autant sortir du cadre de la présente invention.

La configuration de la membrane représentée en traits pleins correspond à un exemple non limitatif de configuration déformée de la membrane sous l'effet de l'application d'une tension électrique au dispositif d'actionnement.

En effet, l'application de ladite tension électrique provoque un fléchissement dudit dispositif d'actionnement vers le fluide 3, comme indiqué par les deux flèches.

Ce fléchissement a pour effet de forcer une partie du fluide situé dans la région 30 entre la zone d'actionnement 1a et le fond 20 (appelée région d'écoulement, qui est délimitée sur la figure 1 par des pointillés) à s'écouler vers le centre de la cavité. Ce faisant, la pression de fluide exercée sur la partie centrale 1b de la membrane augmente, ce qui provoque sa déformation.

La configuration déformée illustrée ici n'est qu'un exemple non limitatif et il est possible d'envisager d'autres déformations de la membrane en fonction de l'amplitude et du sens de fléchissement du dispositif d'actionnement.

Le fond 20 de la cavité est recouvert d'un élément chauffant 5 qui présente, dans ce mode de réalisation, la forme d'un disque, comme illustré en vue de dessus selon A-A.

L'élément chauffant s'étend au moins jusqu'au bord extérieur de la zone d'écoulement 30, de manière à chauffer le fluide 3 à la fois dans la zone d'écoulement 30 et dans la partie centrale de la cavité.

En d'autres termes, l'élément chauffant présente dans ce cas la même géométrie que l'ensemble de la partie centrale 1b et de la zone d'actionnement 1a de la membrane.

Dans le cas où le dispositif optique fonctionne en transmission et que l'élément chauffant se trouve dans le champ optique du dispositif, l'élément chauffant est réalisé en un ou des matériaux transparents à la longueur d'onde visée. Par exemple, on peut employer un oxyde d'indium-étain (ITO ou « Indium Tin Oxide »), qui est un matériau électriquement conducteur transparent dans le domaine visible.

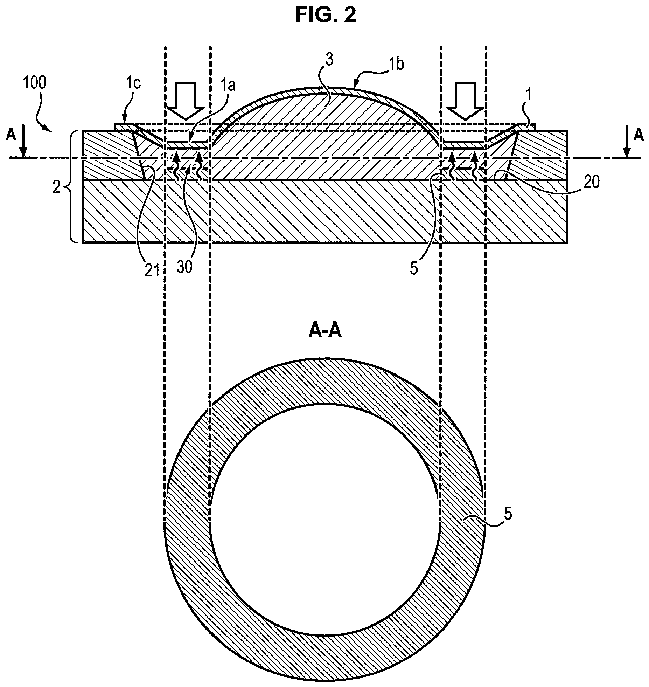

La figure 2 illustre un mode de réalisation du dispositif 100 dans lequel, à la différence du dispositif illustré sur la figure 1, l'élément chauffant 5 présente une forme annulaire. Les autres caractéristiques du dispositif 100 sont similaires à celles du dispositif de la figure 1 et ne sont donc pas décrites à nouveau en détail.

De manière avantageuse, la largeur de l'élément chauffant 5 est au moins égale à la largeur de la zone d'actionnement 1a de la membrane. Le diamètre intérieur de l'élément chauffant 5 est de préférence choisi de sorte à être inférieur ou égal au diamètre intérieur de la zone d'écoulement 30 et le diamètre extérieur de l'élément chauffant 5 est choisi de sorte à être supérieur ou égal au diamètre extérieur de la zone d'écoulement 30. Il est cependant possible de choisir un élément chauffant qui serait moins large que la zone d'actionnement, ou qui serait partiellement décalé par rapport à la zone d'actionnement.

Ainsi, le fluide 3 est chauffé localement, dans la région d'écoulement 30 et éventuellement au voisinage de celle-ci.

Le fait de localiser le chauffage là où l'écoulement du fluide est le plus critique permet d'agir directement sur la partie du fluide dont la viscosité influe le plus sensiblement sur le temps de réponse, d'autant que le fluide présente généralement une conductivité thermique limitée. Un chauffage localisé au niveau de la région de déplacement du fluide permet donc d'éviter de chauffer le reste du dispositif et de gagner en efficacité en termes de puissance requise pour le chauffage du fluide.

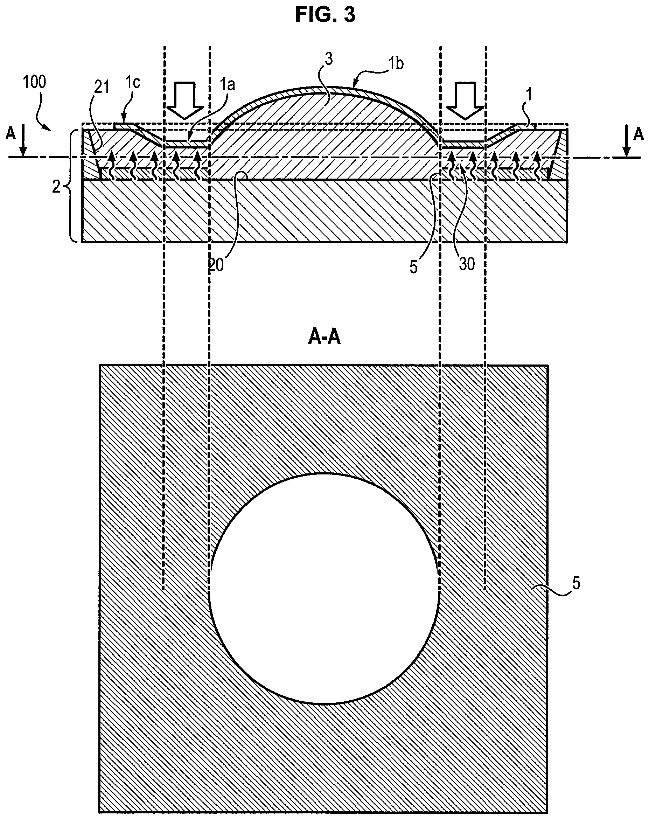

La figure 3 illustre une variante du mode de réalisation de la figure 2, dans laquelle l'élément chauffant 5 présente un contour extérieur rectangulaire et un contour intérieur circulaire. Les autres caractéristiques du dispositif 100 sont similaires à celles du dispositif des figures 1 et 2 et ne sont donc pas décrites à nouveau en détail.

Dans ce cas, le bord intérieur de l'élément chauffant coïncide avec la périphérie de la zone optique du dispositif, de sorte que l'élément chauffant ne s'interpose pas sur le trajet du faisceau lumineux, tandis que le bord extérieur de forme rectangulaire permet d'augmenter la surface d'échange thermique avec le fluide par rapport à l'élément chauffant de la figure 2.

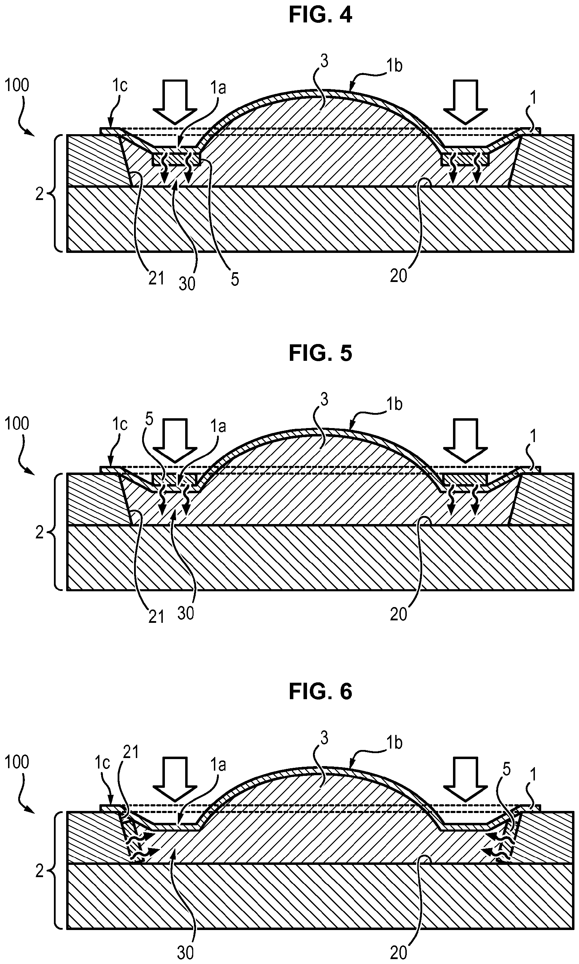

La figure 4 illustre un mode de réalisation du dispositif optique dans lequel l'élément chauffant est agencé dans la zone d'actionnement de la membrane, sur la face en contact avec le fluide dans la région d'écoulement.

L'élément chauffant présente donc une géométrie annulaire, comme sur la figure 2.

D'autre part, l'élément chauffant étant en contact direct avec le fluide de la région d'écoulement, les pertes thermiques sont minimisées.

La figure 5 illustre une variante du dispositif optique de la figure 4 dans laquelle l'élément chauffant 5 est agencé dans la zone d'actionnement 1a de la membrane, sur la face opposée au fluide.

La figure 6 illustre un mode de réalisation du dispositif optique dans lequel l'élément chauffant 5 est agencé sur la paroi de la cavité 21 qui s'étend entre le fond 20 et la membrane 1. L'élément chauffant présente alors la géométrie d'une couronne qui s'étend sur tout ou partie de la hauteur de la paroi 21.

Dans la mesure où la région d'écoulement 30 est relativement proche de la paroi 21, la conduction thermique au travers du fluide peut être suffisante pour chauffer le fluide dans la région 30.

Par ailleurs, il est également envisageable que l'élément chauffant fasse partie du dispositif d'actionnement de la membrane.

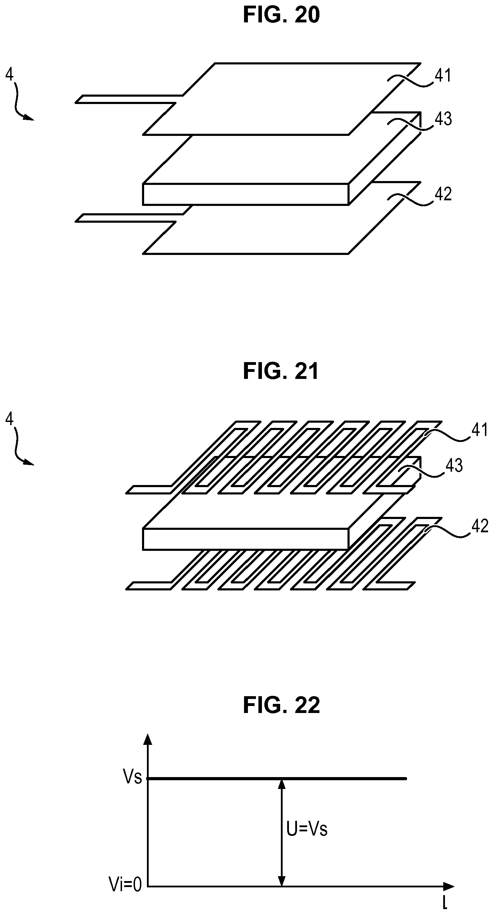

Dans le cas d'un actionnement piézoélectrique, les composants de base du dispositif sont une couche piézoélectrique et deux électrodes empilées de part et d'autre de ladite couche (cf. figure 20). L'application d'une tension entre les deux électrodes provoque une contraction ou une extension du matériau piézoélectrique dans le plan de la couche. Pour obtenir une déflection hors de ce plan, le dispositif doit comprendre d'autres composants, qui peuvent être passifs (tels que des matériaux minéraux, métalliques par exemple) ou actifs (tels que des composants piézoélectriques). Ces différents composants additionnels influent sur l'actionnement, selon leur épaisseur, leur module d'Young, leur contrainte résiduelle, leur position par rapport à la fibre neutre de l'empilement.

Par « faire partie du dispositif d'actionnement » on entend dans le présent texte que l'élément chauffant peut être un composant qui participe à la déflection et à la force engendrée par l'application de la tension sur l'actionnement et/ou un composant qui participe à l'équilibre mécanique du dispositif d'actionnement au repos (notamment un composant qui contribue à la maîtrise de la position au repos du dispositif d'actionnement) et/ou un composant qui permet d'ajuster l'effet du dispositif d'actionnement au repos sur la contrainte dans la membrane.

Par exemple, dans le cas d'un dispositif d'actionnement piézoélectrique, le conducteur ohmique formant l'élément chauffant peut être un élément agencé au voisinage de l'empilement piézoélectrique destiné à équilibrer les contraintes dans l'empilement et maîtriser ainsi la position au repos. Dans ce cas, l'élément chauffant peut être positionné sur la membrane, sur la même face que le dispositif d'actionnement ou sur la face opposée au dispositif d'actionnement.

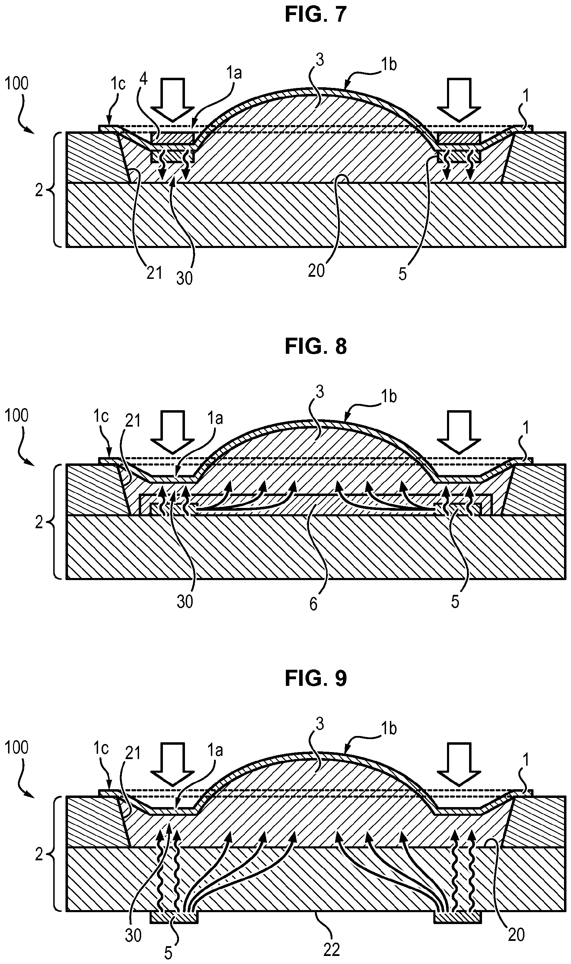

La figure 7 illustre ainsi un mode de réalisation du dispositif optique dans lequel l'élément chauffant 5 est positionné dans la zone d'actionnement 1a de la membrane, sur la face opposée au dispositif d'actionnement 4. Cet agencement présente l'avantage d'isoler électriquement l'élément chauffant vis-à-vis des électrodes du dispositif d'actionnement par l'intermédiaire de la membrane.

Sur le plan thermique, il est avantageux de maximiser la surface d'échange thermique entre l'élément chauffant et le fluide.

Selon une forme d'exécution de l'invention illustrée sur la figure 8, le dispositif optique comprend un élément 6 de diffusion de chaleur s'étendant entre le fluide 3 et l'élément chauffant 5. L'élément 6 est réalisé en un matériau thermiquement plus conducteur que le support 2, tel que du cuivre, de l'argent, ou du DLC (Diamond Like Carbon) si des considérations de transmission optique sont à prendre en compte.

Par exemple, l'élément chauffant 5 présente une forme annulaire telle qu'illustrée sur la figure 2, mais l'élément 6 de diffusion de chaleur présente une surface plus grande que celle de l'élément chauffant.

Ainsi, la chaleur dissipée par l'élément chauffant 5 est diffusée au sein de l'élément 6 et répartie par l'intermédiaire de celui-ci à une surface plus importante de fluide, permettant de chauffer le fluide situé dans la partie centrale de la cavité.

Dans le cas où le dispositif optique fonctionne en transmission et que l'élément 6 se trouve dans le champ optique du dispositif, on choisit pour ledit élément 6 un matériau transparent à la gamme de longueur d'onde visée.

La figure 9 illustre un mode de réalisation du dispositif optique dans lequel l'élément chauffant 5 est agencé sur une face du support 2 opposée au fond 20 de la cavité, en vis-à-vis de la région d'écoulement 30.

Cette solution est susceptible d'être moins efficace, notamment en termes de cinétique de chauffe, mais selon la nature du support (par exemple s'il est en verre), la chaleur dissipée par l'élément chauffant 5 diffuse au travers du support 2 et se répartit sur une surface plus grande que celle de l'élément chauffant lui-même.

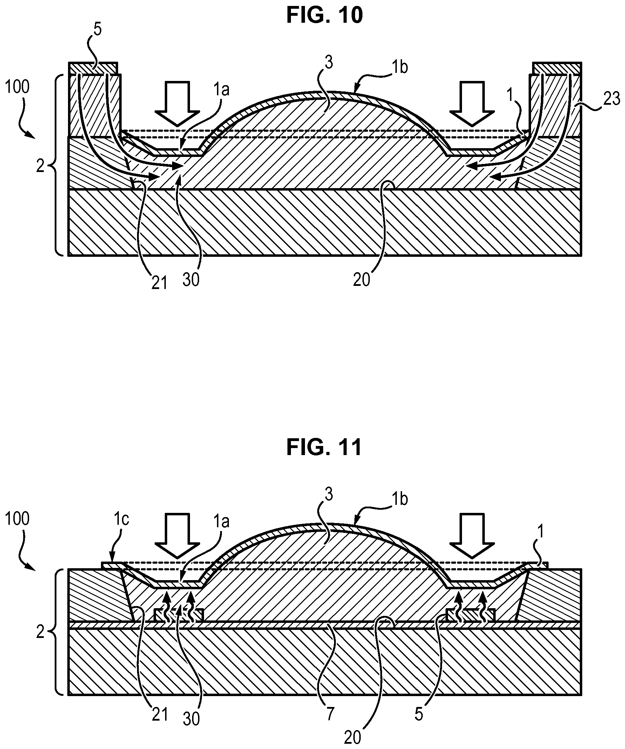

La figure 10 illustre un autre mode de réalisation du dispositif optique dans lequel l'élément chauffant 5 présente une forme annulaire et est agencé sur un substrat 23 collé sur la face du support 2 sur laquelle est ancrée la membrane 1. Ledit substrat 23 est en un matériau thermiquement conducteur, de sorte que la chaleur dissipée par l'élément chauffant 5 diffuse au travers du substrat 23 et du support 2 et permet le chauffage du fluide au niveau de la paroi 21 et dans la région d'écoulement.

Pour chauffer le fluide, il peut être avantageux de placer l'élément chauffant en contact direct avec le fluide et d'isoler ledit élément chauffant de l'extérieur du dispositif optique.

En fonction des résistivités thermiques des différents composants du dispositif optique, l'emplacement et la géométrie de l'élément chauffant peuvent être adaptés selon les modalités décrites plus haut.

Les considérations relatives à la fabrication du dispositif optique peuvent également être prises en compte.

Par exemple, en utilisant les technologies microsystèmes, il peut être avantageux de positionner l'élément chauffant sur la membrane pour simplifier sa fabrication.

Ainsi, la membrane peut remplir une fonction d'isolation électrique entre l'élément chauffant et le dispositif d'actionnement. Ceci évite l'ajout d'une couche électriquement isolante spécifique.

Il peut être également judicieux d'isoler thermiquement le fluide de l'extérieur, par exemple en incluant dans le dispositif une ou des couches thermiquement isolantes autour de la cavité contenant le fluide.

De même, il peut être avantageux d'inclure dans le dispositif optique une ou des couches thermiquement isolantes autour de l'élément chauffant pour isoler celui-ci de l'extérieur.

La figure 11 illustre ainsi un mode de réalisation dans lequel une couche 7 d'isolation thermique est agencée sur le fond 20 entre l'élément chauffant 5, qui est de forme annulaire, et le support 2. Ladite couche 7 permet d'éviter des pertes thermiques de l'élément chauffant 5 vers l'extérieur du dispositif optique. La couche 7 peut comprendre un matériau minéral, tel que $SiO_2$, $SiN$, $Al_2O_3$ ou un matériau polymère.

Les différents modes de réalisation décrits ci-dessus peuvent éventuellement combinés par l'homme du métier en fonction de la configuration du dispositif optique et des performances attendues.

On s'intéresse ci-après au dimensionnement de la cavité et de l'élément chauffant pour obtenir un temps de réponse performant.

Dans le cas d'un dispositif optique dont le temps de réponse se dégrade à basse température, l'objectif principal est de maintenir la viscosité du fluide dans la région d'écoulement et/ou dans la partie centrale de la cavité suffisamment basse à des températures basses (typiquement -10 voire -20°C) pour garantir un temps de réponse performant par rapport à la température ambiante, typiquement 20°C. Pour garantir un fonctionnement en temps de réponse à -10°C sensiblement équivalent au fonctionnement nominal du dispositif à 20°C, il faut chauffer le fluide pour élever sa température de 30°C.

L'énergie thermique à apporter au fluide est proportionnelle à la masse de fluide m (kg), à sa chaleur spécifique $c_S$ (J/kg/K) et à la différence de température recherchée $\Delta T$ (K) :

$$E = c_S \times \Delta T \times m$$

La masse de fluide est définie par le volume V ($m^3$) de fluide contenu dans la cavité multiplié par sa masse volumique $\rho$ ($kg/m^3$). Le volume de fluide est égal à la surface S du dispositif optique multipliée par la profondeur p de la cavité (en faisant l'hypothèse que la cavité est de forme simple comme sur la figure 1, la hauteur de la cavité est considérée comme égale à la distance entre la membrane 1 dans sa position de repos et le fond 20). On en tire la relation :

$$E = c_S \times \Delta T \times \rho \times S \times p$$

Pour minimiser l'énergie requise, il faut alors choisir un fluide ayant une faible chaleur spécifique $c_S$ et une faible masse volumique $\rho$.

Une fois le fluide choisi, l'énergie peut être minimisée en diminuant le volume de fluide dans la cavité.

La surface est généralement définie par une surface optique (zone utile optiquement correspondant généralement à la partie centrale de la membrane) et une surface dédiée à l'actionnement (zone d'actionnement de la membrane pour faire varier la focale).

Cette surface est une caractéristique du dispositif optique, comme l'ouverture optique utile et la variation de focale.

Pour un dispositif optique donné, la profondeur de la cavité peut être ajustée afin de minimiser l'énergie requise. On observe alors que plus la profondeur de cavité est faible, plus l'énergie requise est minimisée.

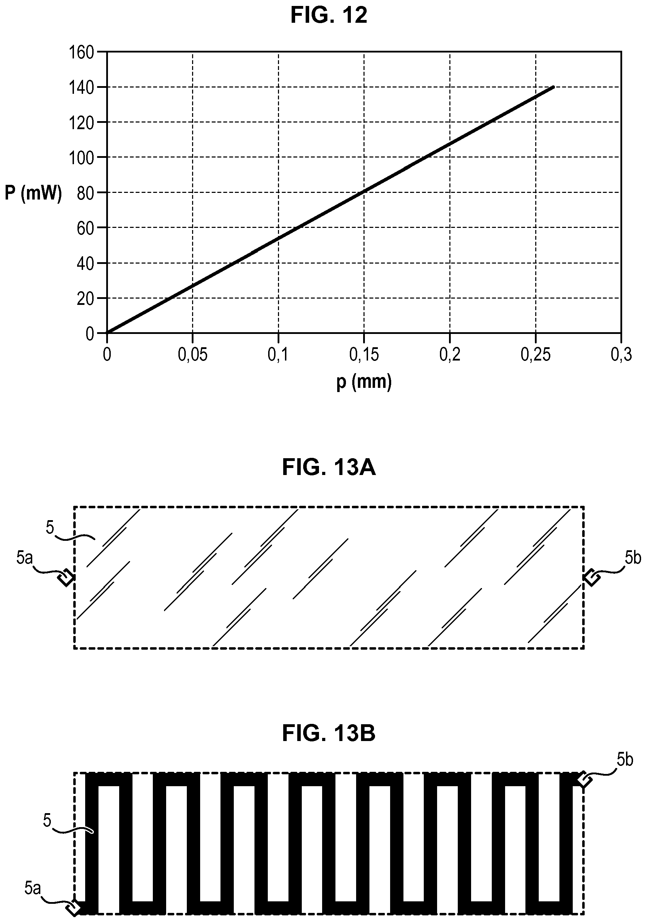

La figure 12 est une courbe illustrant la puissance P (en mW) pour élever la température du fluide de 30°C pendant 1s en fonction de la profondeur p (en mm) de la cavité contenant le fluide, en considérant une cavité de 4 mm de diamètre et un fluide ayant les propriétés suivantes :

Cs = 950 J/kg/K
$\rho$ = 1,5 $kg/m^3$.

La puissance ainsi calculée correspond à un cas idéal où le fluide est parfaitement isolé de l'extérieur.

En fonction des matériaux constitutifs du dispositif et des conditions d'échanges thermiques entre le dispositif et l'extérieur (convection, rayonnement, conduction...) et des pertes thermiques associées, la puissance requise peut être revue à la hausse.

Un calcul plus détaillé voire des simulations (par éléments finis sous ANSYS par exemple) peuvent s'avérer nécessaires.

Quoiqu'il en soit la tendance de l'influence de la profondeur de cavité (épaisseur de fluide) sur la puissance requise reste valable de sorte que, pour gagner en efficacité et minimiser la puissance consommée par l'élément chauffant, il est avantageux de minimiser la profondeur de cavité.

Cependant, à température ambiante, la profondeur de cavité a un effet bénéfique sur le temps de réponse. En effet, plus la profondeur est importante, plus le temps de réponse est rapide.

Il est donc nécessaire de trouver un compromis entre une profondeur de cavité suffisamment grande pour obtenir un temps de réponse du dispositif satisfaisant à température ambiante mais pas trop grande afin de ne pas pénaliser la consommation électrique requise à basse température pour chauffer le fluide dans la région d'écoulement et/ou dans la partie centrale de la cavité et maintenir un temps de réponse satisfaisant.

Dans l'exemple détaillé ci-dessus, le compromis en termes de profondeur se situe entre 50 $\mu$m et 200 $\mu$m typiquement avec une puissance requise de 27 mW à 107 mW respectivement.

La puissance requise pour chauffer le fluide (et maintenir ainsi le temps de réponse à basse température dans une gamme acceptable) doit donc être en phase avec l'application visée et la consommation effective du dispositif en fonctionnement (associée à l'actionnement).

Une fois le dimensionnement réalisé de la sorte (hauteur de fluide / profondeur de cavité définies), l'homme du métier peut concevoir l'élément chauffant adapté.

Connaissant la puissance requise, dans le cas d'un conducteur ohmique, on peut déterminer la résistance en fonction du courant ou de la tension électrique que l'on souhaite appliquer. Par exemple, si l'on souhaite piloter l'élément chauffant avec une tension électrique variable jusqu'à 10V, la résistance minimale requise est alors de 3720 $\Omega$ (pour une profondeur de cavité de 50 $\mu$m) et 931 $\Omega$ (pour une profondeur de cavité de 200 $\mu$m).

Le matériau de l'élément chauffant doit être choisi pour sa conductivité électrique, sa faculté de mise en oeuvre, et éventuellement sa transparence dans la gamme de longueur d'onde désirée (pour un dispositif fonctionnant en transmission où le système de chauffe est également présent dans la zone optique utile).

Par exemple, le cuivre est un bon conducteur électrique (conductivité électrique $\sigma = 5{,}96 \times 10^7$ S/m) alors que le nickel et le platine sont plus résistifs (conductivité électrique respective de $\sigma = 1{,}43 \times 10^7$ S/m et $\sigma = 9{,}66 \times 10^6$ S/m).

Les matériaux cités n'étant pas transparents dans le domaine visible, il est avantageux de placer l'élément chauffant en périphérie de champ optique.

L'oxyde d'indium-étain (ITO) peut être utilisé comme conducteur ohmique transparent dans le domaine visible.

En fonction de la géométrie du champ optique et de la dimension extérieure du dispositif, on dispose d'une certaine surface pour l'élément chauffant. Par exemple, pour un champ optique de diamètre 2 mm et un dispositif optique de 6 mm de côté, on dispose au maximum d'une surface de 32,9 mm² (cas de la figure 3 en négligeant la périphérie de la cavité). Dans le cas où l'on souhaite limiter la zone où est positionné l'élément chauffant à une couronne de 4mm de diamètre par exemple (cas de la figure 2), la surface dédiée à l'élément chauffant est alors de 9,4mm².

Pour optimiser les performances de l'élément chauffant, il est avantageux de maximiser la surface occupée par le conducteur ohmique dans la zone où est positionné l'élément chauffant. Pour ce faire, on peut couvrir l'ensemble de la surface par un conducteur ohmique (cf. figure 13A), ou bien donner au conducteur ohmique une forme de serpentin (cf. figure 13B). Sur ces deux figures, les repères 5a et 5B désignent les bornes de l'élément chauffant 5. Le contour rectangulaire en pointillés désigne la surface occupée par l'élément chauffant, ou zone de chauffe.

En combinant la forme du conducteur ohmique du type de celle illustrée sur la figure 13A ou la figure 13B et les différentes géométries présentées ci-dessus, de nombreuses solutions techniques sont possibles.

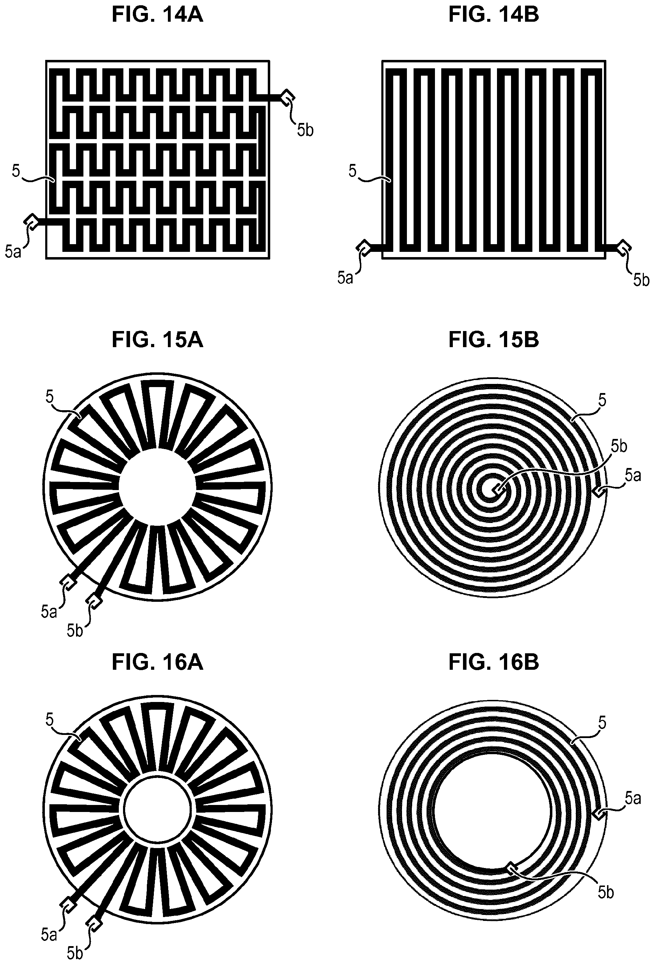

Les figures 14A à 18 illustrent différents exemples.

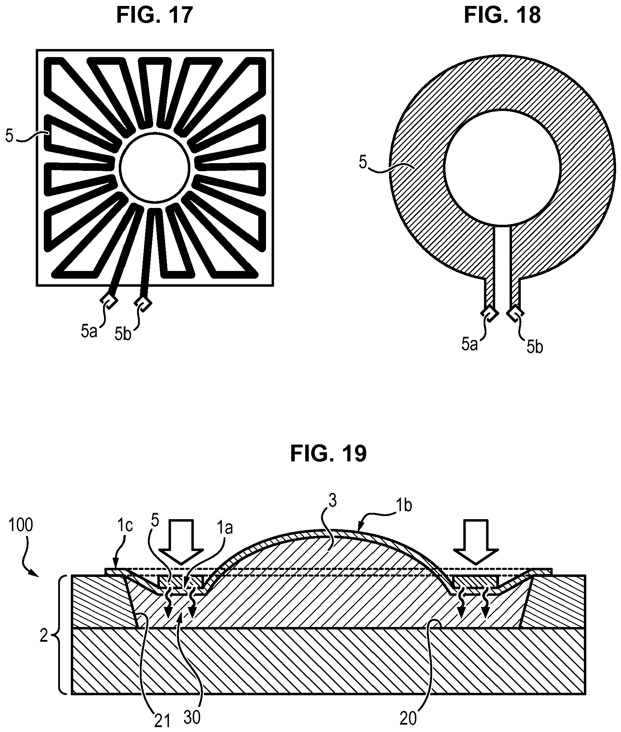

Les figures 14A-14B présentent deux configurations de conducteur ohmique en forme de serpentin agencé sur une surface rectangulaire ou carrée ; les figures 15A-15B illustrent deux configurations de conducteur ohmique en forme de serpentin agencé sur une surface en forme de disque ; les figures 16A-16B illustrent deux configurations de conducteur ohmique en forme de serpentin agencé sur une surface annulaire ; la figure 17 illustre une configuration possible d'un conducteur ohmique en forme de serpentin agencé sur une surface annulaire dont le bord intérieur est circulaire et le bord extérieur rectangulaire ou carré ; la figure 18 illustre un conducteur ohmique sous forme de couche pleine sur une surface annulaire.

On notera que l'extrémité du conducteur ohmique positionnée à l'intérieur de la zone de chauffe (figures 15B et 16B) peut être ramenée à l'extérieur en faisant faire un demi-tour au conducteur ohmique au niveau de l'intérieur.

Sur la base d'un serpentin tel qu'illustré sur la figure 13B et en prenant une largeur de résistance égale à la largeur d'isolation, la surface occupée par le conducteur ohmique est approximativement la moitié de la surface de la zone de chauffe, soit respectivement 16,45 mm² (cas de la figure 3) et 4,7 mm² (cas de la figure 2). En fonction des procédés de fabrication utilisés, on peut ajuster la largeur de résistance et la largeur d'isolation pour augmenter ou diminuer la surface occupée par le conducteur ohmique.

Pour ajuster la valeur de la résistance, on peut commencer par ajuster la section de la résistance. En minimisant cette section, on minimise également la longueur du conducteur ohmique requise pour atteindre la valeur désirée. Par exemple, on peut utiliser une résistance d'épaisseur e = 100 nm (épaisseur classique dans le domaine des microsystèmes) et de largeur L = 50 $\mu$m (facilement réalisable). Dans ce cas, la surface correspondante est égale à : S = e x L = 5.10$^{-12}$ m². En utilisant l'équation ci-dessous qui relie la résistance, la conductivité électrique du matériau, sa longueur et la section de la résistance, on peut calculer les longueurs de résistance associées (voir tableau ci-dessous) :

$$R = \frac{l}{\sigma . S}$$

| | | Résistance (Ohm) | |
|---|---|---|---|
| | | 921 | 3720 |
| Longueur de la résistance (mm) | Cu | 274,5 | 1108,6 |
| | Ni | 65,9 | 266,0 |
| | Pt | 44,5 | 179,7 |

Compte tenu de la largeur retenue pour la résistance (50$\mu$m) et des surfaces de résistance disponibles (16,45mm$^2$ dans le cas de la figure 3 et 4,7mm$^2$ dans le cas de la figure 2), on peut calculer la longueur maximale du conducteur ohmique pouvant être placé dans la zone de chauffe, à savoir 329 mm (cas de la figure 3) et 94 mm (cas de la figure 2).

Etant donnés les résultats présentés dans le tableau ci-dessus, pour obtenir la résistance minimale requise de 3720 $\Omega$ (pour une profondeur de cavité de 50 $\mu$m), on peut utiliser une résistance en Ni ou Pt avec une zone de chauffe étendue à toute la surface du dispositif optique hormis le champ optique (cas de la figure 3). En effet, une longueur de conducteur ohmique de 329 mm étant disponible dans ce cas, on peut aisément placer les 266 mm requis pour un conducteur ohmique en Ni et les 179,7 mm requis pour un conducteur ohmique en Pt.

Pour obtenir la résistance minimale requise de 931 $\Omega$ (pour une profondeur de cavité de 200 $\mu$m), on peut utiliser une résistance en Cu, Ni ou Pt avec une zone de chauffe étendue à toute la surface du dispositif hormis le champ optique (cas de la figure 3). On peut également limiter la zone de chauffe à une couronne de 4 mm de diamètre mais en utilisant une résistance en Ni ou Pt.

Une autre façon de procéder, illustrée sur la figure 18, consiste à recouvrir la surface disponible pour la zone de chauffe par un conducteur ohmique sous forme d'une couche pleine comme sur la figure 13A) et, compte tenu du matériau utilisé pour le conducteur ohmique et de son épaisseur, à calculer la résistance associée. Dans le cas de la figure 2 où 9,4 mm$^2$ sont disponibles, on peut utiliser une résistance en forme de couronne de largeur 1 mm et d'épaisseur 100 nm. Les résistances associées à cette géométrie sont de 1,58 $\Omega$ pour un conducteur ohmique en Cu, 6,59$\Omega$ pour le Ni et 9,76 $\Omega$ pour le Pt. Ces valeurs sont bien inférieures aux résistances requises pour chauffer le liquide avec une tension de 10V (931$\Omega$ pour une profondeur de cavité de 200$\mu$m et 3720$\Omega$ pour une profondeur de cavité de 50$\mu$m). Compte tenu de ces résistances, on peut chauffer le liquide en adaptant le pilotage de l'élément chauffant. Une tension électrique de 0,41V est requise pour le Cu, 0,84V pour le Ni et 1,02V pour le Pt. Les courants électriques requis sont dans ce cas plus importants, respectivement 260mA, 127mA et 105mA. Un tel cas de figure est plus propice donc à un contrôle de l'élément chauffant par le courant plutôt que la tension électrique, les valeurs étant faibles.

Le choix entre l'un et l'autre forme de conducteur ohmique (cf. figure 13A ou figure 13B) se fait en fonction du pilotage prévu pour l'élément chauffant (tension ou courant, gamme d'intensité) et des valeurs de résistance à atteindre.

La figure 19 illustre une variante du mode de réalisation de la figure 7 où l'élément chauffant est totalement intégré au dispositif d'actionnement de la membrane. Dans cet exemple, les électrodes utilisées dans le dispositif d'actionnement piézoélectrique (par exemple) peuvent également servir de conducteur ohmique. Dans ce cas, jusqu'à deux conducteur ohmiques peuvent être intégrés dans le dispositif d'actionnement sans ajouter d'étapes de fabrication supplémentaires.

Pour rappel, la figure 20 illustre le coeur d'un dispositif 4 d'actionnement piézoélectrique de type connu (à savoir une couche de matériau piézoélectrique 43 et les deux électrodes associées 41, 42 sans le ou les éventuel(s) bimorphe(s)) ; pour simplifier le schéma, ce dispositif, qui a une forme de couronne, a été représenté de forme linéaire.

Chacune des électrodes 41, 42 est portée à un équipotentiel respectivement noté Vs et Vi. La différence de potentiel entre les deux électrodes (Vs-Vi) induit un champ électrique dans le matériau piézoélectrique 43 qui est à l'origine de l'actionnement.

Compte tenu de la géométrie du dispositif d'actionnement en forme de couronne, le conducteur ohmique correspondant est illustré sur la figure 16A.

Dans l'exemple illustré sur la figure 21, les deux électrodes 41, 42 remplissent la fonction de conducteur ohmique.

Chacune des électrodes 41, 42 n'est plus portée à un équipotentiel mais soumise à une différence de potentiel, respectivement notée Vs1-Vs2 et Vi1-Vi2, qui est destinée à chauffer le conducteur ohmique que constitue chaque électrode par effet Joule. Par ailleurs, la différence de potentiel entre les deux électrodes (Vs1-Vi1 et Vs2-Vi2) est destinée à induire un champ électrique dans le matériau piézoélectrique et ainsi à actionner le dispositif d'actionnement. Pour assurer un actionnement uniforme, la différence de potentiel entre les deux électrodes doit être uniforme sur toute la surface du matériau piézoélectrique et du dispositif d'actionnement.

La différence U de potentiel entre les électrodes le long desdites électrodes est représentée sur la figure 22 pour un dispositif d'actionnement de type connu ; l'électrode supérieure 41 est portée au potentiel Vs et l'électrode inférieure 42 est mise à la masse (Vi=0).

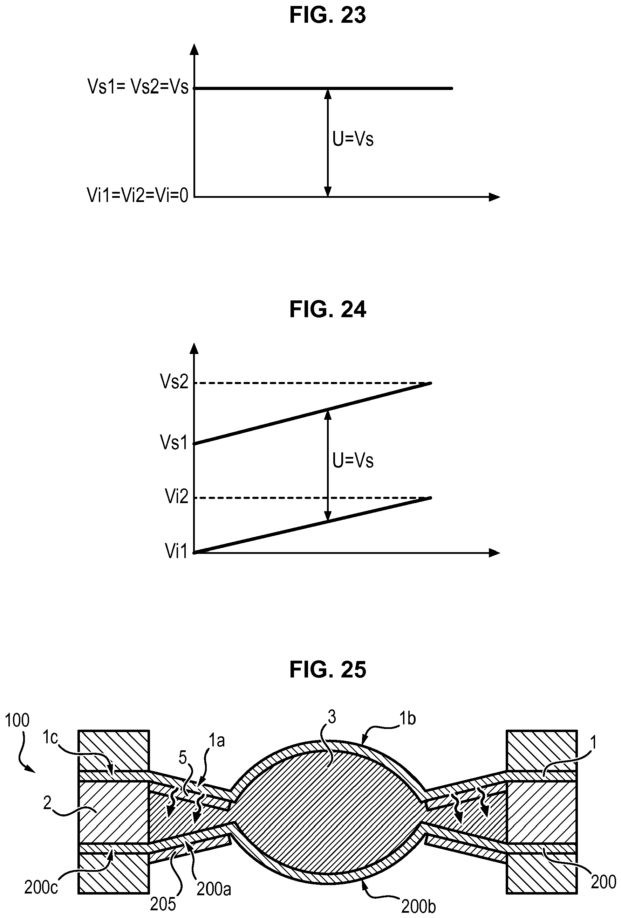

La figure 23 représente la répartition de la différence de potentiel U entre les électrodes d'un dispositif d'actionnement piézoélectrique du type de celui de la figure 21 lorsque l'élément chauffant n'est pas activé. Dans ce cas, l'électrode supérieure 41 est portée à l'équipotentiel Vs1=Vs2=Vs et l'électrode inférieure 42 est mise à la masse (Vi1=Vi2=0).

La figure 24 représente la répartition de la différence de potentiel U entre les électrodes d'un dispositif d'actionnement piézoélectrique du type de celui de la figure 21 lorsque l'élément chauffant est activé. Dans ce cas, l'électrode supérieure 41 est soumise à une différence de potentiel entre Vs2-Vs1 et l'électrode inférieure 42 est soumise à une différence de potentiel entre Vi2-Vi1, la différence de potentiel entre les deux électrodes étant constante (U=Vs).

Si les matériaux des électrodes sont différents, on peut assurer cette différence de potentiel par exemple en ajustant indépendamment le courant dans l'une et l'autre des électrodes (dans le cas où les valeurs de résistance sont différentes), ou en faisant parcourir la même valeur de courant dans les électrodes (dans le cas où les valeurs de résistance sont égales en adaptant leurs géométries).

D'autres éléments du dispositif d'actionnement, comme le(s) couche(s) bimorphe(s) par exemple, peuvent jouer un rôle en lien avec l'élément chauffant (par exemple en remplissant la fonction de couche de diffusion de chaleur ou la fonction d'isolation thermique de l'élément chauffant vis-à-vis de l'extérieur).

Eventuellement, une des deux électrodes peut jouer le rôle de capteur de température.

L'élément chauffant et les éléments qui y sont éventuellement associés peuvent par ailleurs assurer d'autres fonctions dans le dispositif optique. Ainsi, ces éléments peuvent participer à l'actionnement comme dans l'exemple ci-dessus ou bien permettre l'intégration de nouvelles fonctions et notamment une fonction optique comme un diaphragme optique. Par exemple, pour un dispositif fonctionnant en transmission, la notion de diaphragme consiste à se servir de l'élément chauffant (non transparent dans les longueurs d'onde visées dans ce cas) pour définir la zone optique utile du dispositif : dans ce cas, on choisit typiquement un élément chauffant tel qu'illustré aux figures 2 et 3 où le passage du faisceau optique incident est limité au diamètre intérieur. Selon un autre exemple, pour un dispositif optique fonctionnant en réflexion, l'élément chauffant peut également assurer la réflexion de la lumière incidente : l'élément chauffant est alors configuré en miroir.

Dans les modes de réalisation décrits plus haut, le fond de la cavité est considéré comme une paroi du support, c'est-à-dire une paroi sensiblement indéformable sous l'action d'un déplacement de fluide dans la cavité et de la variation de pression de fluide qui en résulte.

Cependant, l'invention couvre également un dispositif optique dans lequel le fond de la cavité comprend une deuxième membrane déformable. Dans ce cas, le fluide exerce un couplage mécanique des deux membranes, qui permet de moduler les déformations adoptées par la partie centrale des deux membranes.

La figure 25 illustre un mode de réalisation du dispositif optique 100 comprenant une membrane déformable additionnelle 200 liée au support 2 par une zone d'ancrage 200c.

La membrane déformable peut elle-même être couplée on non à un dispositif d'actionnement. Dans le mode de réalisation illustré sur la figure 25, la membrane additionnelle 200 présente un dispositif d'actionnement 205 agencé dans une région d'actionnement 200a située entre la zone d'ancrage 200c et la partie centrale 200b de la membrane.

Dans ce cas, l'élément chauffant (non illustré) fait avantageusement partie de l'un et/ou l'autre des dispositifs d'actionnement 5, 205 des deux membranes. L'élément chauffant peut par exemple présenter la même configuration que dans le mode de réalisation de la figure 19.

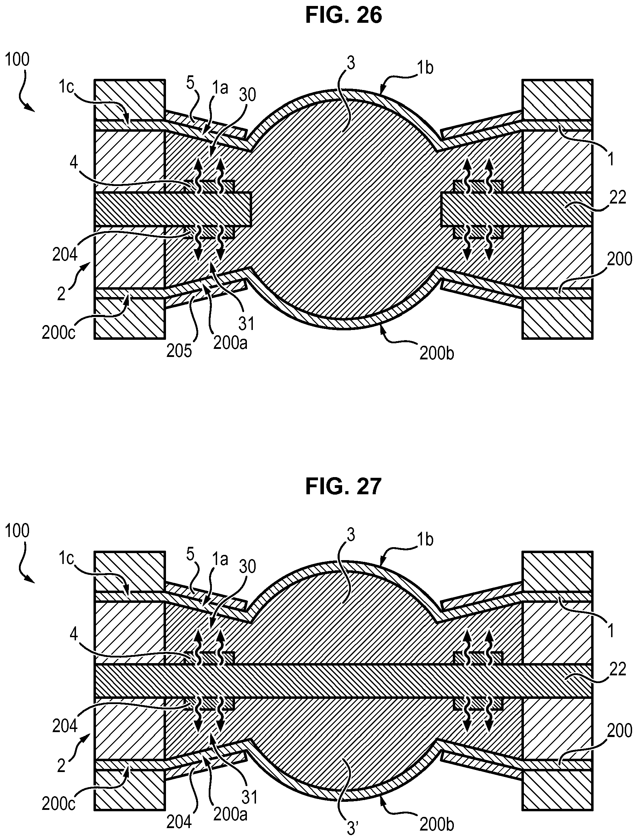

Dans un autre mode de réalisation, illustré sur la figure 26, un substrat 22 peut être interposé en partie entre les membranes 1, 200. Ledit substrat 22 présente une forme de couronne et s'étend radialement vers l'intérieur de la cavité à partir du support 2.

Comme dans le mode de réalisation précédent, la membrane additionnelle 200 est représentée avec un dispositif d'actionnement 205, mais elle pourrait, selon une variante, ne pas être actionnable.

Le diamètre intérieur de la couronne formée par le support est par exemple légèrement inférieur au diamètre intérieur des dispositifs d'actionnement 5, 205 des deux membranes. Dans ce cas, le dispositif comprend deux régions d'écoulement : une première région d'écoulement 30 entre la membrane 1 et le support 22 et une deuxième région d'écoulement 31 entre la membrane additionnelle 200 et le support 22.

Dans ce cas, il peut être avantageux d'agencer deux éléments chauffants 4, 204 sur chaque face du substrat 22 dans chaque région d'écoulement 30, 31. Lesdits éléments chauffants sont par exemple du même type que celui illustré sur la figure 2.

Lesdits éléments chauffants permettent avantageusement de prendre en compte des différences géométriques des régions d'écoulement associées à chaque membrane ; par exemple, dans le cas illustré sur la figure 26, la région d'écoulement 30 présente une épaisseur plus faible que la région d'écoulement 31.

La figure 27 illustre un mode de réalisation du dispositif optique comprenant deux membranes déformables 1, 200.

Chacune des membranes est en contact avec un volume de fluide 3, 3' respectif.

Les deux volumes sont séparés par un substrat intermédiaire 22 qui s'étend sur toute la largeur de la cavité et sont donc indépendants l'un de l'autre.

Dans ce cas, on utilise avantageusement deux éléments chauffants 4, 204 pour agir sur la région d'écoulement 30, 31 respective.

Par exemple, les éléments chauffants peuvent être agencés de part et d'autre du substrat intermédiaire 22, dans la région d'écoulement respective.

Le dispositif optique peut être réalisé par des techniques de microélectronique bien connues de l'homme du métier, notamment des techniques de dépôt en couche mince de type dépôt chimique en phase vapeur, dépôt physique en phase vapeur, électrodéposition, épitaxie, oxydation thermique, évaporation, laminage de films. Par ailleurs, l'ancrage de la membrane sur le support peut impliquer des techniques de collage.

La membrane peut être réalisée à base de matériaux organiques tels que le polydiméthylsiloxane, le polyméthacrylate de méthyle, le polyéthylène téréphtalate, le polycarbonate, le parylène, les résines époxydes, les polymères photosensibles, les silicones, ou de matériaux minéraux tels que le silicium, l'oxyde de silicium, le nitrure de silicium, le silicium polycristallin, le carbone diamant. La membrane peut être constituée d'une seule couche d'un même matériau ou d'un empilement de couches de matériaux différents.

Le fluide peut être un liquide comme le carbonate de propylène, l'eau, un liquide d'indice, une huile optique ou un liquide ionique, une huile silicone, un liquide inerte à forte stabilité thermique et à faible pression de vapeur saturante.

Le fluide peut éventuellement être un gaz tel que l'air, l'azote ou l'hélium principalement pour un dispositif optique fonctionnant en réflexion.

Si le dispositif optique fonctionne en transmission, l'homme du métier choisira l'indice de réfraction du fluide en fonction des performances optiques souhaitées.

REFERENCES

FR 2 965 068

**Revendications**

1. Dispositif optique (100) comprenant :

   une membrane (1) déformable,
   un support (2) auquel une zone d'ancrage périphérique (1c) de ladite membrane (1) est liée,
   une cavité remplie d'un volume constant d'un fluide (3), ladite cavité étant délimitée par la membrane (1), un fond (20, 200) s'étendant sensiblement parallèlement à la membrane (1) et une paroi (21) du support (2) s'étendant entre le fond (20) et la membrane (1),
   un dispositif (4) d'actionnement d'une zone (1a) de la membrane (1) située entre la zone d'ancrage périphérique (1c) et une partie centrale (1b) de la membrane (1), configuré pour fléchir par application d'une tension électrique d'actionnement de sorte à déplacer une partie du volume de fluide située dans une région, dite région d'écoulement (30), située entre la zone d'actionnement de la membrane (1) et le fond (20) de la cavité,
   ledit dispositif optique (100) étant **caractérisé en ce qu'**il comprend un élément chauffant (5) adapté pour chauffer localement le fluide dans la région d'écoulement (30).

2. Dispositif selon la revendication 1, **caractérisé en ce que** le fond de la cavité est une paroi du support et **en ce que** l'élément chauffant (5) est agencé sur une région du fond (20) de la cavité en vis-à-vis de la région d'écoulement (30).

3. Dispositif selon l'une des revendications 1 à 2, **caractérisé en ce qu'**un élément d'isolation thermique est intercalé entre l'élément chauffant (5) et le fond (20) de la cavité.

4. Dispositif selon la revendication 1, **caractérisé en ce que** le fond de la cavité comprend une membrane déformable additionnelle (200).

5. Dispositif selon l'une des revendications 1 à 4, **caractérisé en ce que** l'élément chauffant est agencé sur ou sous la zone d'actionnement (1a) de la membrane (1).

6. Dispositif selon la revendication 1 à 5, **caractérisé en ce que** l'élément chauffant fait partie du dispositif d'actionnement (4) de la membrane.

**7.** Dispositif selon la revendication 6, **caractérisé en ce que** le dispositif d'actionnement (4) de la membrane est un dispositif piézoélectrique comprenant un empilement d'une couche piézoélectrique (43) et d'au moins deux électrodes (41, 42) agencées de part et d'autre de la couche piézoélectrique et **en ce qu'**au moins une desdites électrodes (41, 42) constitue l'élément chauffant.

**8.** Dispositif selon l'une des revendications 1 à 7, **caractérisé en ce que** l'élément chauffant (5) présente une forme annulaire en regard de la zone d'actionnement (1a) de la membrane.

**9.** Dispositif de prise de vue comprenant au moins un dispositif optique selon l'une des revendications 1 à 8.

**10.** Procédé pour réduire le temps de réponse d'un dispositif optique (100) comprenant:

une membrane (1) déformable,
un support (2) auquel une zone d'ancrage périphérique (1c) de ladite membrane (1) est liée,
une cavité remplie d'un volume constant d'un fluide (3), ladite cavité étant délimitée par la membrane (1), un fond (20) s'étendant sensiblement parallèlement à la membrane (1) et une paroi (21) du support (2) s'étendant entre le fond (20) et la membrane (1),
un dispositif (4) d'actionnement d'une zone (1a) de la membrane (1) située entre la zone d'ancrage périphérique (1c) et une partie centrale (1b) de la membrane (1), configuré pour fléchir par application d'une tension électrique d'actionnement de sorte à déplacer une partie du volume de fluide située dans une région, dite région d'écoulement (30), située entre la zone d'actionnement de la membrane (1) et une face du support (2) opposée à ladite membrane,
ledit procédé étant **caractérisé en ce qu'**il comprend un chauffage localisé du fluide (3) dans la région d'écoulement (30) de sorte à diminuer la viscosité du fluide (3) dans ladite région.

**11.** Procédé selon la revendication 10, **caractérisé en ce qu'**il comprend la mesure d'une température dans l'environnement dudit dispositif optique (100) et **en ce que** le chauffage est mis en oeuvre lorsque ladite température est inférieure à un seuil.

**12.** Procédé selon l'une des revendications 10 ou 11, **caractérisé en ce qu'**il comprend la mise en oeuvre du chauffage dès que le dispositif d'actionnement (4) est activé.

**13.** Procédé selon l'une des revendications 10 à 12, **caractérisé en ce que** le chauffage est réalisé de manière impulsionnelle.

**14.** Procédé selon l'une des revendications 10 à 13, **caractérisé en ce que** le dispositif d'actionnement (4) de la membrane est un dispositif piézoélectrique comprenant un empilement d'une couche piézoélectrique (43) et d'au moins deux électrodes (41, 42) agencées de part et d'autre de la couche piézoélectrique et **en ce que** le chauffage est réalisé en faisant passer un courant électrique dans lesdites électrodes.

**15.** Procédé selon la revendication 14, **caractérisé en ce que** l'on applique aux bornes de chaque électrode une différence de potentiel (Vs2-Vs1, Vi2-Vi1) de telle sorte que la différence (U) entre le potentiel des deux électrodes est constante sur la surface de la couche piézoélectrique.

**Patentansprüche**

**1.** Optische Vorrichtung (100), umfassend:

eine verformbare Membran (1),
einen Träger (2), an dem eine periphere Verankerungszone (1c) der Membran (1) befestigt ist,
einen Hohlraum, der mit einem konstanten Volumen eines Fluids (3) gefüllt ist, wobei der Hohlraum durch die Membran (1) begrenzt ist, wobei sich ein Boden (20, 200) im Wesentlichen parallel zur Membran (1) erstreckt und sich eine Wand (21) des Trägers (2) zwischen dem Boden (20) und der Membran (1) erstreckt,
eine Vorrichtung (4) zum Betätigen einer Zone (1a) der Membran (1), die sich zwischen der peripheren Verankerungszone (1c) und einem zentralen Teil (1b) der Membran (1) befindet, die konfiguriert ist, um durch Anlegen einer elektrischen Betätigungsspannung abzulenken, um einen Teil des Volumens des Fluids zu verschieben, das sich in einem Bereich befindet, der als Strömungsbereich (30) bezeichnet wird und sich zwischen der Betätigungszone der Membran (1) und dem Boden (20) des Hohlraums befindet, wobei die optische Vorrichtung (100) **dadurch gekennzeichnet ist, dass** sie ein Heizelement (5) umfasst, das angepasst ist, um das Fluid im Strömungsbereich (30) lokal zu erwärmen.

2. Vorrichtung nach Anspruch 1, **dadurch gekennzeichnet, dass** der Boden des Hohlraums eine Wand des Trägers ist und dass das Heizelement (5) auf einem Bereich des Bodens (20) des Hohlraums gegenüber dem Strömungsbereich (30) angeordnet ist.

3. Vorrichtung nach einem der Ansprüche 1 bis 2, **dadurch gekennzeichnet, dass** ein Wärmedämmelement zwischen dem Heizelement (5) und dem Boden (20) des Hohlraums eingesetzt ist.

4. Vorrichtung nach Anspruch 1, **dadurch gekennzeichnet, dass** der Boden des Hohlraums eine zusätzliche verformbare Membran (200) umfasst.

5. Vorrichtung nach einem der Ansprüche 1 bis 4, **dadurch gekennzeichnet, dass** das Heizelement auf oder unter der Betätigungszone (1a) der Membran (1) angeordnet ist.

6. Vorrichtung nach Anspruch 1 bis 5, **dadurch gekennzeichnet, dass** das Heizelement Teil der Betätigungsvorrichtung (4) der Membran ist.

7. Vorrichtung nach Anspruch 6, **dadurch gekennzeichnet, dass** die Betätigungsvorrichtung (4) der Membran eine piezoelektrische Vorrichtung ist, die einen Stapel aus einer piezoelektrischen Schicht (43) und mindestens zwei Elektroden (41, 42) umfasst, die auf beiden Seiten der piezoelektrischen Schicht angeordnet sind, und dass mindestens eine der Elektroden (41, 42) das Heizelement bildet.

8. Vorrichtung nach einem der Ansprüche 1 bis 7, **dadurch gekennzeichnet, dass** das Heizelement (5) eine ringförmige Form gegenüberliegend von der Betätigungszone (1a) der Membran aufweist.

9. Bildaufnahmevorrichtung, umfassend mindestens eine optische Vorrichtung nach einem der Ansprüche 1 bis 8.

10. Verfahren zum Reduzieren der Reaktionszeit einer optischen Vorrichtung (100), umfassend:

eine verformbare Membran (1),
einen Träger (2), an dem eine periphere Verankerungszone (1c) der Membran (1) befestigt ist,
einen Hohlraum, der mit einem konstanten Volumen eines Fluids (3) gefüllt ist, wobei der Hohlraum durch die Membran (1) begrenzt ist, wobei sich ein Boden (20, 200) im Wesentlichen parallel zur Membran (1) erstreckt und sich eine Wand (21) des Trägers (2) zwischen dem Boden (20) und der Membran (1) erstreckt,
eine Vorrichtung (4) zum Betätigen einer Zone (1a) der Membran (1), die sich zwischen der peripheren Verankerungszone (1c) und einem zentralen Teil (1b) der Membran (1) befindet, die konfiguriert ist, um durch Anlegen einer elektrischen Betätigungsspannung abzulenken, um einen Teil des Volumens des Fluids zu verschieben, das sich in einem Bereich befindet, der als Strömungsbereich (30) bezeichnet wird und sich zwischen der Betätigungszone der Membran (1) und einer der Membran gegenüberliegenden Seite des Trägers (2) befindet, wobei das Verfahren **dadurch gekennzeichnet ist, dass** es eine lokale Erwärmung des Fluids (3) im Strömungsbereich (30) umfasst, um die Viskosität des Fluids (3) in dem Bereich zu verringern.

11. Verfahren nach Anspruch 10, **dadurch gekennzeichnet, dass** es das Messen einer Temperatur in der Umgebung der optischen Vorrichtung (100) umfasst und dass das Erwärmen ausgeführt wird, wenn die Temperatur unter einem Schwellenwert liegt.

12. Verfahren nach einem der Ansprüche 10 oder 11, **dadurch gekennzeichnet, dass** es die Ausführung der Heizung umfasst, sobald die Betätigungsvorrichtung (4) aktiviert wird.

13. Verfahren nach einem der Ansprüche 10 bis 12, **dadurch gekennzeichnet, dass** die Erwärmung mittels Impulse durchgeführt wird.

14. Verfahren nach einem der Ansprüche 10 bis 13, **dadurch gekennzeichnet, dass** die Betätigungsvorrichtung (4) der Membran eine piezoelektrische Vorrichtung ist, die einen Stapel einer piezoelektrischen Schicht (43) und mindestens zwei Elektroden (41, 42) umfasst, die auf beiden Seiten der piezoelektrischen Schicht angeordnet sind, und dass die Erwärmung durch Leiten eines elektrischen Stroms durch die Elektroden erreicht wird.

15. Verfahren nach Anspruch 14, **dadurch gekennzeichnet, dass** eine Potentialdifferenz (Vs2-Vs1, Vi2-Vi1) an die Anschlüsse jeder Elektrode derart angelegt wird, dass die Differenz (U) zwischen dem Potential der beiden Elektroden auf der Oberfläche der piezoelektrischen Schicht konstant ist.

**Claims**

1. An optical device (100) comprising:

   a deformable membrane (1),
   a support (2) to which a peripheral anchoring area (1c) of said membrane (1) is connected,
   a cavity filled with a constant volume of fluid (3), said cavity being delimited by the membrane (1), a base (20, 200) extending substantially parallel to the membrane (1) and a wall (21) of the support (2) extending between the base (20) and the membrane (1),
   an actuation device (4) of an area (1a) of the membrane (1) located between the peripheral anchoring area (1c) and a central part (1b) of the membrane (1), configured to bend by application of electrical actuation voltage so as to move some of the volume of fluid located in a region, so-called flow region (30), located between the actuation area of the membrane (1) and the base (20) of the cavity,
   said optical device (100) being **characterized in that** it comprises a heating element (5) adapted to locally heat the fluid in the flow region (30).

2. The device according to claim 1, **characterized in that** the base of the cavity is a wall of the support and **in that** the heating element (5) is arranged on a region of the base (20) of the cavity facing the flow region (30).

3. The device according to one of claims 1 or 2, **characterized in that** a thermal insulation element is interposed between the heating element (5) and the base (20) of the cavity.

4. The device according to claim 1, **characterized in that** the base of the cavity comprises an additional deformable membrane (200).

5. The device according to one of claims 1 to 4, **characterized in that** the heating element is arranged on or under the actuation area (1a) of the membrane (1).

6. The device according to claims 1 to 5, **characterized in that** the heating element forms part of the actuation device (4) of the membrane.

7. The device according to claim 6, **characterized in that** the actuation device (4) of the membrane is a piezoelectric device comprising a stack of a piezoelectric layer (43) and at least two electrodes (41, 42) arranged on either side of the piezoelectric layer and **in that** at least one of said electrodes (41, 42) constitutes the heating element.

8. The device according to one of claims 1 to 7, **characterized in that** the heating element (5) has an annular form facing the actuation area (1a) of the membrane.

9. An imaging device comprising at least an optical device according to one of claims 1 to 8.

10. A method for reducing the response time of an optical device (100) comprising:

    a deformable membrane (1),
    a support (2) to which a peripheral anchoring area (1c) of said membrane (1) is connected,
    a cavity filled with a constant volume of fluid (3), said cavity being delimited by the membrane (1), a base (20) extending substantially parallel to the membrane (1) and a wall (21) of the support (2) extending between the base (20) and the membrane (1),
    an actuation device (4) of an area (1a) of the membrane (1) located between the peripheral anchoring area (1c) and a central part (1b) of the membrane (1), configured to bend by application of electrical actuation voltage so as to move some of the volume of fluid located in a region, so-called flow region (30), located between the actuation area of the membrane (1) and a face of the support (2) opposite said membrane,

said method being **characterized in that** it comprises localized heating of the fluid (3) in the flow region (30) so as to reduce the viscosity of the fluid (3) in said region.

11. The method according to claim 10, **characterized in that** it comprises measuring a temperature in the environment of said optical device (100) and **in that** heating is carried out when said temperature is less than a threshold.

12. The method according to one of claims 10 or 11, **characterized in that** it comprises carrying out heating as soon as the actuation device (4) is activated.

13. The method according to one of claims 10 to 12, **characterized in that** heating is carried out by pulses.

14. The method according to one of claims 10 to 13, **characterized in that** the actuation device (4) of the membrane is a piezoelectric device comprising a stack of a piezoelectric layer (43) and at least two electrodes (41, 42) arranged on either side of the piezoelectric layer and **in that** the heating is created by passing an electric current through said electrodes.

15. The method according to claim 14, **characterized in that** a difference in potential (Vs2-Vsi, Vi2-Vii) is applied to the terminals of each electrode in such a way that the difference (U) between the potential of both electrodes is constant on the surface of the piezoelectric layer.

## FIG. 1

A-A

## FIG. 2

A-A

# FIG. 3

A-A

# FIG. 4

# FIG. 5

# FIG. 6

**FIG. 7**

**FIG. 8**

**FIG. 9**

## FIG. 10

## FIG. 11

## FIG. 12

## FIG. 13A

## FIG. 13B

## FIG. 14A

## FIG. 14B

## FIG. 15A

## FIG. 15B

## FIG. 16A

## FIG. 16B

**FIG. 17**

**FIG. 18**

5

5a  5b

5

5a  5b

**FIG. 19**

100

1c  5  1a

3  1b

2

21  30

20

## FIG. 20

## FIG. 21

## FIG. 22

# FIG. 23

$Vs1 = Vs2 = Vs$

$U = Vs$

$Vi1 = Vi2 = Vi = 0$

# FIG. 24

$Vs2$

$Vs1$

$U = Vs$

$Vi2$

$Vi1$

# FIG. 25

## FIG. 26

## FIG. 27

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2965068
- FR 2919073
- FR 2950154
- FR 2950153